# DEMANDE DE BREVET EUROPEEN

(11) **EP 0 568 417 A1**
(43) Date de publication de la demande: **03.11.1993**
(21) Numéro de dépôt: 93401044.8
(22) Date de dépôt: 22.04.1993
(51) Int. Cl.: B21D 43/22, B65G 47/92

(54) **Installation de manutention pour le transport de flans d'une machine de découpage à un dispositif d'empilage**

(30) Priorité: 29.04.1992 FR 9205315
(71) Demandeur: D.M.S., F-59472 Seclin Cédex (FR)
(72) Inventeur: Jubre, Bernard, F-59640 Villeneuve d'ASCQ (FR); Humbert, Eric, F-59136 Wavrin (FR); Puche, Bernard, F-59133 Phalempin (FR)
(74) Mandataire: Fontanié, Etienne

(57) **Abrégé**

Installation de manutention pour transporter des flans d'une machine de découpage (11) sur un dispositif d'empilage (12) comprenant au moins un transporteur à marche cyclique (14) conçu pour amener les flans (10) au-dessus du dispositif d'empilage et programmé pour s'arrêter avant de lâcher le flan lorsque celui-ci se trouve au-dessus dudit dispositif.

Pour rendre son fonctionnement indépendant de celui du dispositif d'alimentation de la machine de découpage, l'installation comporte un bras (42) lié à l'organe mobile du transporteur (14) et un organe de préhension monté à l'extrémité dudit bras et apte à saisir le flan par un de ses bords lorsque ledit organe mobile se trouve à l'extrémité de son trajet le plus proche de la machine de découpage (11).

## Description

La présente invention concerne les installations de découpage de flans à partir d'une bande, notamment d'une bande de tôle, au moyen d'une cisaille ou d'une presse, et a trait plus particulièrement aux moyens pour transporter les flans de la machine de découpage au dispositif d'empilage.

Généralement, les flans sortant de la machine de découpage sont amenés au dispositif d'empilage soit par gravité, en glissant sur un plan incliné, soit au moyen d'un transporteur à marche continue, par exemple un transporteur à bande magnétique, qui prend les flans sur la table de sortie de la machine et les lâche au-dessus du dispositif d'empilage.

Pour éviter de détériorer les flans par frottement sur les transporteurs et/ou par chocs contre les butées et les guides du dispositif d'empilage, on a proposé (Brevet français n° 88.05599 au nom de la demanderesse) de transporter les flans au moyen d'un transporteur à marche cyclique dont la cadence est la même que celle de la machine de découpage et dont le pas est égal à la distance séparant cette dernière du dispositif d'empilage ou à un sous-multiple de cette distance et de lâcher les flans sur le dispositif d'empilage lorsque le transporteur est à l'arrêt. Pour que le flan se trouve toujours exactement au-dessus de la pile lorsque le transporteur s'arrête, il est nécessaire que la position du flan sur la table de sortie de la machine lorsqu'il est pris en charge par le transporteur soit toujours la même, et que cette prise en charge ait lieu toujours au même instant du cycle du transporteur, ce qui exige un synchronisme rigoureux entre les cycles du dispositif d'alimentation de la machine et ceux du transporteur. Or, cette synchronisation n'est pas toujours réalisable avec la précision voulue lorsqu'il s'agit d'équiper des machines de découpage existantes, et on risque alors de retrouver certains des défauts des solutions classiques.

Le but de la présente invention est de se dispenser de cette obligation et de permettre un fonctionnement correct des installations décrites dans le paragraphe précédent même lorsque le cycle du dispositif d'alimentation de la machine de découpage n'est pas rigoureusement répétitif. Un autre but de l'invention est de faciliter l'implantation des installations d'empilage des flans dans un atelier existant.

L'installation objet de l'invention est caractérisée en ce qu'elle comporte des moyens liés au transporteur et aptes à extraire le flan de la machine, sans l'aide du dispositif d'alimentation de cette dernière, et à amener le flan jusqu'au dispositif d'empilage avec l'aide du transporteur.

Etant donné que le flan est lié de manière positive au transporteur pendant toute la durée de son déplacement, il peut être amené exactement au-dessus du dispositif d'empilage, toujours dans la même position, en contrôlant simplement la marche du transporteur. Par ailleurs, il est possible, grâce à l'invention, d'extraire le flan de la machine de découpage soit dans la direction de déroulement de la bande, comme dans les installations classiques, soit perpendiculairement à cette direction, ce qui peut faciliter l'implantation de l'installation d'empilage dans un atelier existant.

Lesdits moyens sont constitués par un bras lié à l'organe mobile du transporteur, et un organe de préhension monté à l'extrémité dudit bras et apte à saisir le flan par un de ses bords lorsque ledit organe mobile se trouve à l'extrémité de son trajet la plus proche de la machine de découpage. L'organe de préhension peut être mécanique, pneumatique ou magnétique.

Suivant une forme de réalisation préférée, le transporteur est du type à bande sans fin et comporte des moyens magnétiques ou pneumatiques permettant de plaquer les flans sous le brin inférieur de la bande et de les y maintenir sur toute la course du transporteur, ces moyens pouvant être rendus inactifs pour permettre le dépôt des flans sur le dispositif d'empilage, et le dit bras est fixé sous le brin inférieur de la bande de telle sorte que le flan est supporté par la table de sortie de la machine de découpage lorsqu'il est extrait de la machine puis est plaqué contre le brin inférieur de la bande du transporteur lorsqu'il arrive sous le transporteur.

De préférence, le bras est porté par un chariot déplaçable sur des rails fixés le long du châssis du transporteur et lié au brin inférieur de ce dernier. Le chariot pourra, par exemple, avoir une section en L, avec une aile verticale portant des galets roulant sur des rails fixés sur un côté du châssis du transporteur, et une aile horizontale fixée sous le brin inférieur de la bande du transporteur et portant ledit bras.

L'organe de préhension sera avantageusement constitué par des aimants aptes à venir au contact de l'un des bords du flan, ces aimants étant montés sur un support déplaçable longitudinalement par rapport à des butées prévues à l'extrémité du bras, de telle sorte que les aimants puissent être rendus inactifs en les rétractant en deça des butées pour supprimer la liaison entre le bras et le flan; dans le même but, on pourra utiliser des électro-aimants qui pourront être désexcités.

Pour l'empilage des flans de grande longueur, on pourra utiliser deux systèmes ou plus, chacun d'eux étant constitué par un transporteur muni d'un bras de préhension et les transporteurs étant disposés en paralléle et marchant en synchronisme. Eventuellement, certains des transporteurs pourront être dépourvus de bras de préhension; ils ne serviront alors qu'à soutenir le flan pour éviter qu'il ne subisse une déformation trop importante pendant son transport.

Lorsque la durée du cycle du transporteur sera supérieure à celle de la machine de découpage, on utilisera deux systèmes travaillant en alternance : on associera alors à chaque système des moyens de levage aptes à soulever chaque transporteur, après qu'il ait lâché un flan au-dessus du dispositif d'empilage, de façon à pouvoir ramener le bras de préhension dans une position d'attente près de la machine de découpage pendant le transfert d'un autre flan jusqu'au dispositif d'empilage par l'autre système. Les transporteurs pourront, par exemple, être suspendus à un portique par un systéme de leviers manoeuvrables par des vérins.

D'autres caractéristiques de l'invention apparaîtront à la lecture de la description qui suit et se réfère aux dessins l'accompagnant qui montrent, à titre d'exemple non-limitatif, une forme de réalisation de l'invention et sur lesquels :

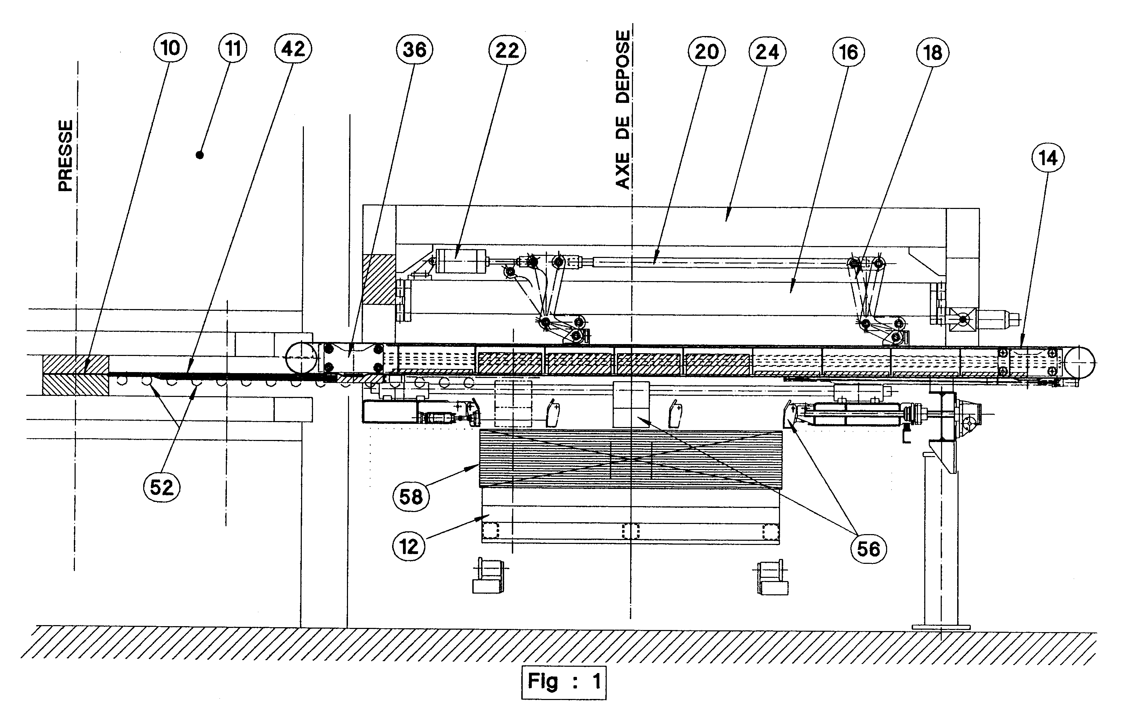

La figure 1 est une vue en élévation d'une installation de manutention conforme à l'invention;

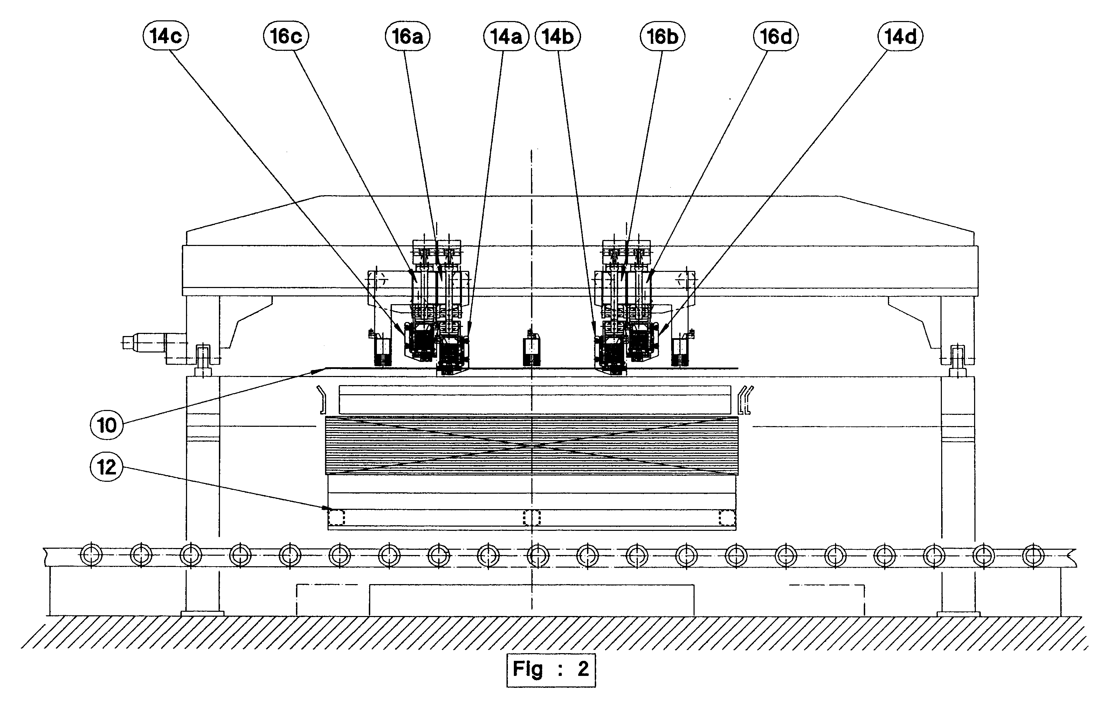

La figure 2 est une vue de face de l'installation de la figure 1;

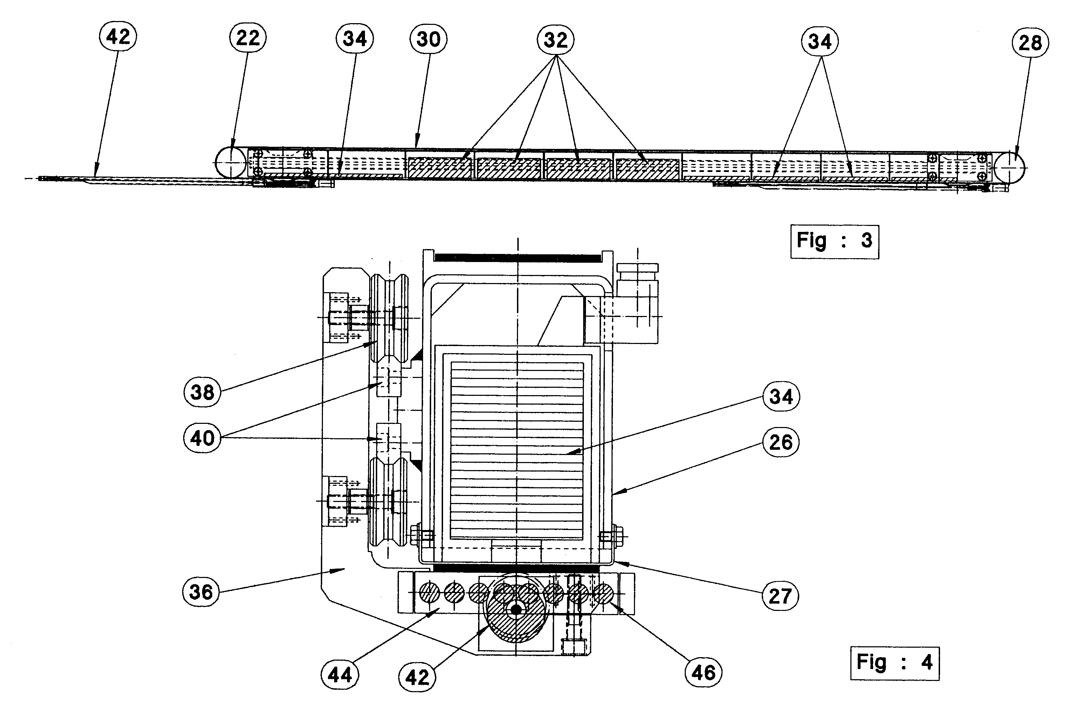

La figure 3 est une vue en élévation de l'un des transporteurs de l'installation;
La figure 4 est une coupe transversale, à plus grande échelle, du transporteur;
La figure 5 est une vue en plan de l'extrémité du bras de préhension du transporteur; et
La figure 6 est une vue en bout du bras.

L'installation représentée sur les dessins sert à transférer des flans 10 de la presse 11 au dispositif d'empilage 12. Elle est constituée par quatre transporteurs identiques 14a, 14b, 14c et 14d qui sont suspendus à des poutres 16a, 16b, 16c et 16d, respectivement, par des systèmes de levage comprenant,chacun, deux leviers coudés 18, une bielle 20 et un vérin 22. Les poutres 16a et 16c sont solidarisées à leurs extrémités par des traverses munies de galets roulant sur deux poutres parallèles d'un portique 24 et dont un au moins est motorisé pour permettre de déplacer les transporteurs 14a et 14c perpendiculairement à la direction de transfert des flans. De même, les poutres 16b et 16d sont solidarisées à leurs extrémités par des traverses munies de galets roulant sur les poutres du portique pour permettre le déplacement des transporteurs 14b et 14d perpendiculairement à la direction de transfert des flans. Le portique 24 est lui-même muni de roues dont certaines sont motorisées pour permettre de déplacer l'ensemble de l'installation de manutention lorsqu'il est nécessaire d'effectuer des opérations d'entretien ou des réparations.

Chaque transporteur comporte un châssis 26 constitué par une poutre à section en U renversé dont la base est fermée par une tôle en acier inoxydable 27. Une poulie 28 est montée à chacune des extrémités du châssis et une courroie ou bande sans fin 30 est tendue entre les deux poulies. L'une des poulies est couplée à un groupe moto-réducteur permettant de l'entraîner en rotation. La tension de la bande est suffisante pour que son brin inférieur reste plaqué sur la tôle 27. Des électro-aimants 32 sont placés à l'intérieur du châssis 26, dans la zone du transporteur qui surplombe le dispositif d'empilage; entre cette zone et les extrémités du transporteur, ce sont des aimants permanents 34 qui sont logés dans le châssis 26.

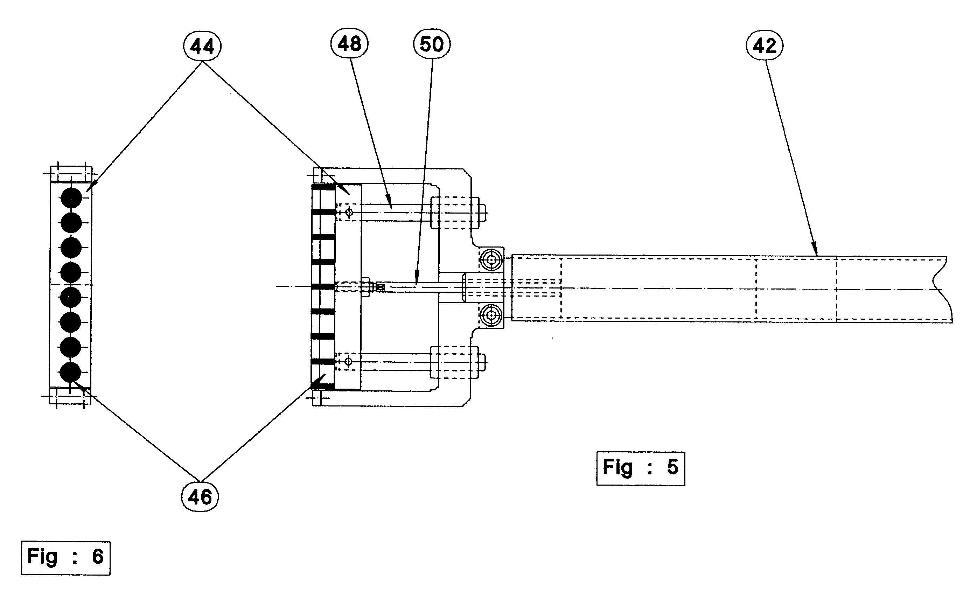

A chaque transporteur est associé un chariot à section en L 36 dont l'aile verticale porte quatre galets 38 roulant sur des rails 40 fixés sur un côté du châssis 26. L'aile horizontale du chariot est fixée au brin inférieur de la bande 30 par tout moyen convenable : vis, rivet, colle, etc .. et porte un bras 42 qui s'étend vers la presse parallèlement à la direction de transport des flans. Le bras 42 est constitué par une canne creuse dont l'extrémité, en forme de fourche, porte une barrette 44 sur laquelle est montée une série d'aimants 46. La barrette 44 est supportée par deux tiges de guidage 48, paralléles à l'axe du bras, et un tirant 50 passant à l'intérieur du bras et actionné par un vérin monté sur le chariot 36 permet de la déplacer entre une position active, ou elle est légèrement en saillie par rapport aux extrémités de la fourche comme représenté sur la figure 5, et une position rétractée, en retrait par rapport aux extrémités de la fourche qui, en servant de butée d'arrêt du bord du flan, permettent alors de désolidariser ce dernier des aimants 46, et par conséquent, du bras 42. La longueur du bras 42 est choisie pour que son extrémité puisse venir au contact du bord du flan se trouvant dans la presse lorsque le chariot 36 se trouve à l'extrémité du transporteur la plus proche de la presse.

La presse 11 est équipée d'un dispositif d'alimentation non représenté qui provoque l'avance pas-à-pas de la bande de tôle dans laquelles les flans sont découpés. Dans les installations classiques, le dispositif d'alimentation sert aussi à éjecter de la presse le flan qui vient d'être découpé.

La table de sortie de la presse 11 est constituée par une série de rouleaux 52; elle se prolonge sous l'extrémité adjacente des transporteurs 14 et son plan de support se trouve à une faible distance verticale du brin inférieur des transporteurs. Des gorges circulaires sont ménagées dans les rouleaux pour le passage des bras 42.

Les transporteurs 14a et 14b, d'une part, et 14c et 14d, d'autre part, travaillent simultanément et en synchronisme, et les deux paires de transporteurs travaillent en alternance. L'écartement entre les transporteurs de chaque paire est choisi en fonction de la longueur du flan (dimension perpendiculaire à la direction de transport du flan); cet écartement est réglé par déplacement des poutres 16.

Dès que le flan est détaché de la bande, en fin de découpe, ou à l'ouverture de la presse, il est attiré par les aimants 46 des bras 42 des transporteurs de l'une des paires, par exemple 14a - 14b, qui avaient été placés dans une position d'attente, à très faible distance (quelques millimètres) du bord adjacent du flan se trouvant dans la presse, et ce bord vient s'appliquer sur les barrettes 44 des deux bras. Les transporteurs 14a et 14b sont alors mis en route, avant le dispositif d'alimentation de la presse, et le flan est tiré hors de la presse par les bras 42. Dans la première partie du trajet, le flan est supporté par les rouleaux 52 de la table de sortie de la presse. Lorsqu'il arrive sous les transporteurs, il est attiré par les aimants, plaqué contre la bande 30 et entraîné par celle-ci.

Le cycle de marche des transporteurs 14a et 14b est programmé pour qu'ils s'arrêtent lorsque le flan se trouve exactement au-dessus de la zone du dispositif d'empilage prévue pour le recevoir; cette zone est délimitée par des guides 56 dont les positions sont réglables. Les barrettes 44 portant les aimants 46 sont alors rétractées, les électro-aimants 32 sont désexcités, et le flan tombe sur la pile 58 déjà formée.

L'installation représentée est prévue pour desservir une presse dont la cadence est supérieure à celle des transporteurs. Les paires de transporteurs 14a - 14b et 14c - 14d fonctionnent alors en alternance, les transporteurs 14c - 14d effectuant leur course retour pour ramener le bras en position d'attente près de la presse pendant que les transporteurs 14a - 14b extraient un flan de la presse et le transportent jusqu'au dispositif d'empilage, et vice-versa. Pour éviter toute interférence dans le fonctionnement des transporteurs, la paire de transporteurs effectuant sa course de retour est soulevée au moyen des systèmes de levage 18 - 20 - 22 qui les supportent.

Grâce au dispositif de l'invention, le déplacement du flan est totalement indépendant du cycle de marche du dispositif d'alimentation de la presse et il n'y a aucune possibilité de mouvement relatif entre le flan et le transporteur, de sorte que le flan se trouve toujours dans la même position lorsque le transporteur s'arrête.

Un autre avantage résultant de l'indépendance des dispositifs de manutention des flancs et d'alimentation de la presse est qu'il est possible de disposer les transporteurs soit dans la direction de déroulement de la bande de tôle alimentant la presse, soit perpendiculairement à cet axe, ce qui facilite l'implantation du dispositif d'empilage.

Il est bien entendu que toutes les modifications qui peuvent être apportées à la forme de réalisation décrite par l'emploi de moyens techniques équivalents entrent dans le cadre de l'invention.

## Revendications

1. Installation de manutention pour transporter des flans d'une machine de découpage à un dispositif d'empilage, comprenant au moins un transporteur à marche cyclique conçu pour amener les flans au-dessus du dispositif d'empilage et programmé pour s'arrêter avant de lâcher le flan lorsque celui-ci se trouve au-dessus dudit dispositif, caractérisée en ce qu'elle comporte des moyens (42) liés au transporteur (14) et aptes à extraire le flan (10) de la machine (11), sans l'aide du dispositif d'alimentation de cette dernière, et à amener le flan jusqu'au dispositif d'empilage (12) avec l'aide du transporteur.

2. Installation selon la revendication 1, caractérisée en ce lesdits moyens sont constitués par un bras (42) lié à l'organe mobile (30 - 36) du transporteur, et un organe de préhension (44 - 46) monté à l'extrémité dudit bras et apte à saisir le flan (10) par un de ses bords lorsque ledit organe mobile se trouve à l'extrémité de son trajet la plus proche de la machine de découpage.

3. Installation selon la revendication 2, caractérisée en ce que le transporteur (14) est du type à bande sans fin et comporte des moyens magnétiques (32 - 34) ou pneumatiques permettant de plaquer les flans sous le brin inférieur de la bande (30) et de les y maintenir sur toute la course du transporteur, ces moyens pouvant être rendus inactifs pour permettre le dépôt des flans sur le dispositif d'empilage (12), et en ce que ledit bras (42) est fixé sous le brin inférieur de la bande qui se trouve lui-même légèrement au-dessus du plan de la table de sortie (52) de la machine de découpage.

4. Installation selon la revendication 3, caractérisée en ce que ledit bras (42) est porté par un chariot (36) déplaçable sur des rails fixés le long du transporteur et est lié au brin inférieur de la bande (30) du transporteur.

5. Installation selon la revendication 4, caractérisée en ce que ledit chariot (36) a une section en L avec une aile verticale portant des galets (38) roulant sur des rails (40) fixés sur un côté du châssis (26) du transporteur, et une aile horizontale fixée sous le brin inférieur de la bande (30) du transporteur et portant ledit bras (42).

6. Installation selon l'une quelconque des revendications 2 à 5, caractérisée en ce que l'organe de préhension est constitué par un ou plusieurs aimants (46) aptes à venir au contact de l'un des bords du flan.

7. Installation selon la revendication 6, caractérisée en ce que le ou les aimants (46) sont montés sur un support (44) déplaçable longitudinalement par rapport à des butées prévues à l'extrémité du bras (42), de telle sorte que le ou les aimants puissent être rendus inactifs en les rétractant en deça des butées.

8. Installation selon l'une quelconque des revendications précédentes, caractérisée en ce qu'elle comporte plusieurs transporteurs (14a et 14b, 14c et 14d) disposés en parallèle et marchant en synchronisme, chaque transporteur étant muni d'un bras de préhension (42).

9. Installation selon l'une quelconque des revendications précédentes, caractérisée en ce qu'elle comporte plusieurs transporteurs ou paires de transporteurs (14a - 14b, 14c 14d) travaillant en alternance, et en ce que chaque transporteur est supporté par un système de levage (18 - 20 - 22) apte à le soulever au-dessus du ou des autres transporteurs.
